# EUROPEAN PATENT APPLICATION

(11) **EP 2 022 583 A1**
(43) Date of publication of application: **11.02.2009**
(21) Application number: 07730380.8
(22) Date of filing: 14.03.2007
(51) Int. Cl.: B23B 45/14

(54) **DEVICE FOR GUIDING DRILL BITS FOR DRILLING HOLES**

(30) Priority: 16.03.2006 ES 200600672
(71) Applicant: Cañas y Gomez, S.L., 36350 Nigrán (Pontevedra) (ES)
(72) Inventor: CAÑAS FONTÁN, José, 36350 NIGRÁN (PONTEVEDRA) (ES)
(74) Representative: Carvajal y Urquijo, Isabel
(86) International application number: PCT/ES2007/000139
(87) International publication number: WO 2007/104813

(57) **Abstract**

Consisting of a body (1) provided with two parallel bases (3 and 4) and with a plurality of parallel holes (5) of different diameters for the insertion of different diameters of drill bit, it is **characterized in that** inside the body (1) there is a void (14) that interrupts the holes (5) in the body (1) for collecting the dust waste produced when the hole is drilled. It comprises a rotary cover (9) that closes off the base (3) and that includes a hole (10) of a diameter identical to the largest diameter of the holes (5) in the body (1) for preventing the dust from being able to exit via the holes (5) in the base (3).

## Description

### Object of the Invention

The invention relates to a device of the type of those provided to place the drill in a position perpendicular to the surface to be drilled, to prevent the drill bit from slipping when the drilling is started and to guide the perpendicular movement of the drill bit while the hole is drilled.

In addition to the previous functionalities, the object of the invention is to provide a device which allows collecting the dust generated as waste when the hole is drilled.

### Background of the Invention

The problems involved in drilling a hole are known in the state of the art, therefore placing the drill bit in a position perpendicular to the surface to be drilled is required, and subsequently the precaution must be taken that when the drilling is started, the drill bit does not slip sideways such that the hole is not made in the required place. Once the drilling is started, the perpendicular position of the drill bit must be maintained in order to correctly make the hole on the surface to be drilled. This problem is made worse in those surfaces which are hard and slippery, because when the drilling is started the drill bit slips towards the sides extremely easily.

To solve these drawbacks, the same proprietor of the present invention already developed a device described in Utility Model no. U-200301217, which relates to an anti-movement utensil of the drill bit when holes are drilled.

The indicated utensil comprises a body provided with two parallel bases and with a plurality of parallel holes of different diameters provided to allow the insertion of different diameters of drill bits, such that by means of the mentioned holes the drill bit is guided while the hole is drilled.

The utensil is furthermore provided in one of the bases of the body with a non-slip and elastic perimetric ring-shaped element forming the means for supporting the device on the surface to be drilled, such that its movement is prevented when the hole is drilled, and consequently it allows making a hole that is perfectly perpendicular to the surface and in the required point.

Although this utensil carries out its function perfectly, it has the drawback that the dust, which is obtained as a result of drilling the hole; falls to the floor, which forces removing the dust which has fallen to the floor once the hole has been drilled.

### Description of the Invention

To solve and achieve the previously indicated objectives, the invention has developed a device for guiding drill bits for drilling holes which, like the device mentioned in the previous section, comprises a body which is provided with two parallel bases and with a plurality of parallel holes of different diameters for the insertion of different diameters of drill bit according to the needs of the hole to be made. The invention also provides that in one of the bases of the body, it comprises a perimetric ring-shaped element for the non-slip support on the surface to be drilled to prevent the movement of the device when the hole is drilled.

The main novelty of the invention lies in the fact that a void has been provided inside the body, which void interrupts the holes made in the body, such that the dust produced when the hole is drilled is deposited in said void, the dust being prevented from falling to the floor.

The device of the invention is furthermore complemented with the incorporation of a rotary cover by means of which the base opposite to the base for the support on the surface to be drilled is closed off, such that the dust is thus prevented from being able to exit to the outside via the base opposite to the support base for the support on the surface to be drilled. The rotary cover is provided with a hole having a diameter that is at least identical to the largest diameter of the holes made on the body, such that the use of the different diameters of drill bit is allowed, placing the hole of the rotary cover in correspondence with the hole of the body corresponding to the diameter of the drill bit with which the hole must be drilled.

The hole of the cover is further provided with an extension through which viewing an area of the base opposite to the support base of the body is allowed, which area includes an indication of the diameter of each hole of the body, such that a viewer is provided through which the diameter of the hole of the body which is located opposite to the hole of the cover and which corresponds to the diameter of each of the drill bits which can be used by means of the device of the invention is observed.

The device of the invention further comprises means for retaining the rotary cover in the body, which means are formed by a lug provided in the rotary cover which is fixed by means of a non-return mechanism in a housing provided in the body.

In the preferred embodiment of the invention, it has been provided that the lug of the rotary cover and the housing of the body are located at their center.

It must also be indicated that the invention provides that the side surface of the rotary cover has a grooving facilitating the grip of the rotary cover in order to rotate it and position the hole of the rotary cover in correspondence with the hole of the body selected for drilling the hole.

In the preferred embodiment of the invention, the body is formed by a side wall the openings of which are closed off by the parallel bases, in which the parallel holes of different diameters for the insertion of different diameters of drill bits are included. In this case, the rotary cover is retained in the corresponding base of the body.

A series of drawings is attached below to facilitate a better understanding of this specification, which drawings form an integral part of such specification and in which the object of the invention has been shown with an illustrative and non-limiting character.

### Brief Description of the Drawings

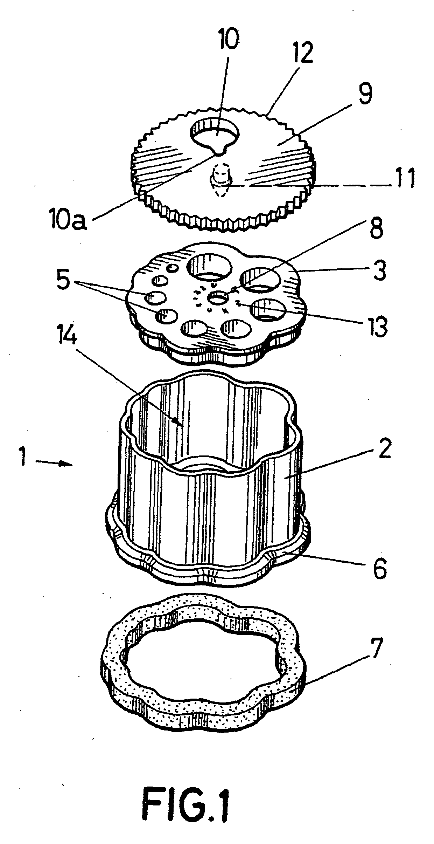

Figure 1 shows an exploded perspective view of the device of the invention.

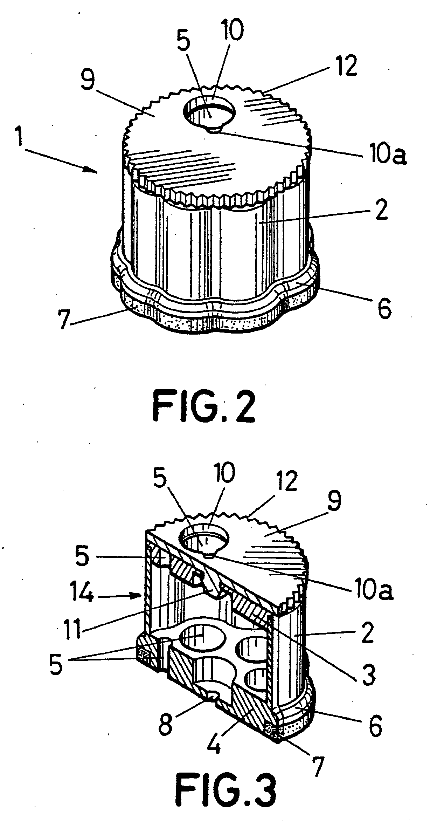

Figure 2 shows a perspective view of the device of the invention with the elements forming it attached.
Figure 3 shows a sectioned view of the device of the previous figure.

### Description of the Preferred Embodiment

A description of the invention based on the aforementioned figures is made below.

The invention comprises a body 1 which is formed by a cylindrical side wall 2 which is closed off by means of two parallel bases 3 and 4 such that a void 14 is defined inside the body 1.

According to the embodiment, the base 4 forming the surface for the support of the device on the surface to be drilled is obtained together with the cylindrical side wall 2 in the mold, while the opposite base 3 is obtained by means of an independent mold such that it is then adhered on the opening of the cylindrical side wall 2.

Both bases 3 and 4 are provided with a plurality of holes 5 of different diameters arranged concentrically for the insertion of different diameters of drill bit, such that each hole of the base 3 is opposite to the hole of the same diameter of the base 4, defining parallel holes for the insertion of different diameters of drill bit.

In correspondence with the holes 5, the cylindrical side wall 2 of the body 1 has an arrangement of concave longitudinal curved sections alternating with convex longitudinal sections, which facilitates the grip of the device.

The base 4 is provided with a perimetric rim 6 defining a housing of a perimetric ring-shaped element 7 which is provided for supporting the device on the surface on which drilling the hole is required. Said ring-shaped element 7 has an elastic and non-slip nature to prevent the device from moving while the hole is drilled.

The device of the invention is complemented with the incorporation of a rotary cover 9 which is provided in its central area with a lug 11 which is retained in a housing 8 made at the center of the rear base 3 of the body 1. The lug 11 is retained in the housing 8 by means of a non-return mechanism allowing the angular movement of the rotary cover 9.

In order to drill the hole, it has been provided that the rotary cover 9 has a hole 10 the diameter of which is identical to the largest of the diameters of the holes 5 made in the bases 3 and 4 of the body 1, such that by means of the angular movement of the cover 9, the hole 10 can be placed in correspondence with one of the holes 5, more specifically with the hole 5 corresponding to the diameter of the drill bit to be used for drilling the hole.

It must also be indicated that the hole 10 of the cover 9 comprises an extension 10a for viewing an area 13 of the base 3. Area 13 includes a number corresponding to the diameter of each hole 5 to indicate the diameter of the drill bit to be inserted in each of the holes 5, which has been previously selected by means of the arrangement of the hole 10 in correspondence with one of the holes 5, such that the diameter of the drill bit to be used is viewed in area 13 through extension 10a.

Based on the description made, it will be easily understood that in order to drill a hole the perimetric ring-shaped element 7 must be arranged on the surface to be drilled such that the point on which the hole must be drilled is located in correspondence with the hole 5 corresponding to the diameter of the drill bit to be used; which diameter is viewed through the viewer formed by the extension 10a upon making the hole 10 of the rotary cover 9 coincide with the hole 5 selected for drilling the hole.

Once the body 1 is arranged in the indicated position, the drill bit is inserted through the hole 10 of the rotary cover 9 and through the hole 5 of the bases 3 and 4 of the body 1, in order to then drill the hole, such that the dust which is generated runs towards the inside of the body 1 through the hole 5 of the base 4, the dust being housed in the void 14. Furthermore, by means of the arrangement of the rotary cover 9 the generated dust is prevented from being able to exit outside the body 1, such that all the dust which has been generated when the hole is drilled is retained inside the body 1, it is therefore prevented from falling to the floor and making the place in which the hole has been drilled dirty.

## Claims

1. A device for guiding drill bits for drilling holes, comprising a body (1) provided with two parallel bases (3 and 4) and with a plurality of parallel holes (5) of different diameters for the insertion of different diameters of drill bits; in one of the bases (4) of which it comprises a perimetric ring-shaped element (7) for the non-slip support on the surface to be drilled; it is **characterized in that** inside the body (1) there is a void (14) that interrupts the holes (5) of the body (1) for collecting the dust waste produced when the hole is drilled.

2. The device for guiding drill bits for drilling holes according to claim 1, **characterized in that** it comprises a rotary cover (9) that closes off the base (3) opposite to the support base (4) of the body (1) and that comprises a hole (10) of a diameter that is at least identical to the largest diameter of the holes (5) of the body (1).

3. The device for guiding drill bits for drilling holes according to claim 2, **characterized in that** it comprises means (11, 8) for retaining the rotary cover (9) in the body (1).

4. The device for guiding drill bits for drilling holes according to claim 3, **characterized in that** the means for retaining the rotary cover (9) in the body (1) comprise a lug (11) provided in the rotary cover (9) which is fixed by means of a non-return mechanism in a housing (8) provided in the body (1).

5. The device for guiding drill bits for drilling holes according to claim 4, **characterized in that** the lug (11) of the rotary cover (9) is located at the center thereof, like the housing (8) of the body (1).

6. The device for guiding drill bits for drilling holes according to claim 2, **characterized in that** the rotary cover (9) has a grooved side surface (12) to facilitate its grip.

7. The device for guiding drill bits for drilling holes according to claim 2, **characterized in that** the hole (10) of the cover (9) comprises an extension (10a) for viewing an area (13) of the base (3) opposite to the support base (4) of the body (1), in which an indication of the diameter of each hole (5) of the body (1) is included.

8. The device for guiding drill bits for drilling holes according to the previous claims, **characterized in that** the body (1) comprises a side wall (2) which is closed off by the parallel bases (3 and 4).
